# EUROPÄISCHE PATENTSCHRIFT

(11) **EP 3 073 452 B1**
(45) Veröffentlichungstag und Bekanntmachung des Hinweises auf die Patenterteilung: **29.04.2020**
(21) Anmeldenummer: 15161092.0
(22) Anmeldetag: 26.03.2015
(51) Int. Cl.: G07C 9/25, G07C 9/27, G07C 9/10, G06F 1/16, H04W 4/80, H04W 4/50, G02B 27/01, G06F 3/01

(54) **Verfahren zur Überwachung und Steuerung eines Zugangskontrollsystems**
METHOD FOR MONITORING AND CONTROLLING AN ACCESS CONTROL SYSTEM
PROCÉDÉ DE SURVEILLANCE ET DE COMMANDE D'UN SYSTÈME DE CONTRÔLE D'ACCÈS

(43) Veröffentlichungstag der Anmeldung: 28.09.2016
(73) Patentinhaber: SKIDATA AG, 5083 Grödig/Salzburg (AT)
(72) Erfinder: Lang, Christian, 5120 Haigermoos (AT); Clemente, Jorge, 5400 Hallein (AT)
(74) Vertreter: Karakatsanis, Georgios

(56) Entgegenhaltungen:
- WO-A1-2014/198945
- US-A1- 2013 069 985
- US-A1- 2013 141 313
- US-A1- 2013 278 631
- US-A1- 2014 125 558
- Anonymous: "OKDoor turns Google Glass into a virtual gatekeeper - SlashGear", , 4 February 2014 (2014-02-04), XP055587664, Retrieved from the Internet: URL:https://www.slashgear.com/okdoor-turns -google-glass-into-a-virtual-gatekeeper-04 315699/ [retrieved on 2019-05-10]

## Beschreibung

Die vorliegende Erfindung bezieht sich auf ein Verfahren zur Überwachung und Steuerung eines Zugangskontrollsystems gemäß dem Oberbegriff des Patentanspruchs 1. Ferner bezieht sich die Erfindung auf ein System zur Durchführung des Verfahrens.

Aus dem Stand der Technik sind Datenbrillen bekannt. Sie umfassen ein Brillengestell, welches optional Brillengläser aufweist, sowie in das Gestell integrierte Komponenten, insbesondere Schnittstellen zur drahtlosen Kommunikation, einen Prozessor, Speichermittel, eine Kamera, ein Mikrofon, eine Batterie, einen Lautsprecher und eine Anzeigevorrichtung, welche als Head-up Display ausgeführt ist und das Bild über ein Glasprisma oder für den Fall, dass Brillengläser vorgesehen sind, auf eines oder beide Brillengläser im Sichtfeld des Benutzers projiziert.

Ferner können Datenbrillen einen USB-Anschluss und ein Touchpad aufweisen, wobei die Anzeigevorrichtung eine sogenannte Eye-tracking Funktionalität aufweisen kann.

Zugangskontrollsysteme umfassen in der Regel zumindest einen Server und mindestens eine mit dem Server zum Zweck der Datenkommunikation verbindbare und in der Regel einen Mikroprozessor und Speichermittel aufweisende Zugangskontrollvorrichtung, die Zugangsberechtigungen erfasst und bei einer gültigen Zugangsberechtigung ein Sperrorgan im Öffnungssinne betätigt, um den Zugang zu gewähren. ID-basierte Zugangskontrollsysteme verwenden die ID eines Kundenmediums, wobei die ID des Kundenmediums durch Zugangskontrollvorrichtungen des Zugangskontrollsystems ausgelesen und an den zumindest einen Server übermittelt wird, welcher anhand der ID den Zugang über die die ID übermittelnde Zugangskontrollvorrichtung gewährt oder verweigert. Das Kundenmedium kann beispielsweise als RFID-Tag, RFID-Karte oder als Papierticket mit maschinenlesbaren Informationen ausgeführt sein.

ID-basierte Zugangskontrollsysteme weisen im Gegensatz zu den sogenannten Medium-basierten Zugangskontrollsystemen, bei denen der Zugang anhand der auf einem Kundenmedium abgelegten Informationen gewährt oder verweigert wird ohne einen zentralen Server zu kontaktieren, den Vorteil auf, dass eine hohe Flexibilität und Skalierung gewährleistet wird. Eine ID eines Kundenmediums können mehrere Arten von Zugangsberechtigungen, beispielsweise für unterschiedliche Bereiche und unterschiedliche Zeiten und unterschiedliche Betreiber zugeordnet werden, was insbesondere bei Skigebieten von Vorteil ist.

Für den Fall, dass eine Zugangskontrollvorrichtung oder der Server offline sind, werden in der Zugangskontrollvorrichtung die erfassten Zugangsberechtigungen nach Plausibilitäts-Parametern hinsichtlich der Gültigkeit analysiert, und es wird der Zugang gewährt, wenn vorgegebene Parameter vorgegebene Werte aufweisen oder innerhalb eines vorgegebenen Wertebereiches liegen. Beispielsweise wird für den Fall, dass die Zugangsberechtigung eine Tageskarte ist und das Gültigkeitsdatum dem aktuellen Datum entspricht, der Zugang gewährt. Die erfassten Daten der Zugangsberechtigung werden für eine spätere Auswertung in der Zugangskontrollvorrichtung zwischengespeichert und bei Wiederherstellung der online-Verbindung auf den Server eingespielt.

Ferner kann in einem Speichermittel bzw. in einer Datenbank der zumindest einen Zugangskontrollvorrichtung eine Positiv/Negativ-Liste oder eine so genannte Whitelist abgelegt sein, mittels der der Gültigkeitszustand einer Zugangsberechtigung über die ID der Zugangsberechtigung ermittelt wird, welche von zumindest einem Server in regelmäßigen Abständen oder durch eine entsprechende Steuerung der Zugangskontrollvorrichtung aktualisiert wird. Auf diese Weise kann, wenn eine Zugangskontrollvorrichtung oder ein Server offline sind der Zugang gewährt werden, wenn anhand der Positiv/Negativ-Liste oder der Whitelist die Zugangsberechtigung als gültig bezeichnet ist.

Zur Überwachung und Steuerung von Zugangskontrollsystemen muss das Personal zumindest einen Computer bedienen und die Anzeige zumindest einer Anzeigevorrichtung überwachen. Für den Fall, dass das Personal gleichzeitig Kunden direkt betreut, was beispielsweise an einem Schalter der Fall sein kann, erweist sich die kontinuierliche Überwachung und Steuerung des Zugangskontrollsystems als schwierig.

Aus der WO 2014/198945 A1 ist eine Datenbrille bekannt, welche als Scanner zum gleichzeitigen Scannen der Bordkarte und eines Ausweises eingesetzt werden kann, um dem Bedienpersonal anzuzeigen, ob die Daten der Bordkarte mit den Daten des Ausweises übereinstimmen. Aus der US2013/069985 A1 ist eine Datenbrille bekannt, welche zur Steuerung eines Gerätes verwendet wird, das sich innerhalb der optischen Reichweite der Datenbrille befindet.

Der vorliegenden Erfindung liegt die Aufgabe zugrunde, ein Verfahren zur Überwachung und Steuerung eines Zugangskontrollsystems umfassend zumindest einen Server und zumindest eine mit dem zumindest einen Server zum Zweck der Datenkommunikation verbindbare Zugangskontrollvorrichtung anzugeben. Diese Aufgabe wird durch die Merkmale des Patentanspruchs 1 gelöst. Ferner soll ein System zur Durchführung des Verfahrens angegeben werden, der Gegenstand des Patentanspruchs 8 ist. Weitere erfindungsgemäße Ausgestaltungen und Vorteile gehen aus den Unteransprüchen hervor.

Demnach wird ein Verfahren zur Überwachung und Steuerung eines Zugangskontrollsystems umfassend zumindest einen Server und zumindest eine mit dem zumindest einen Server zum Zweck der Datenkommunikation verbindbare Zugangskontrollvorrichtung vorgeschlagen, im Rahmen dessen zur Überwachung und Steuerung des Zugangskontrollsystems eine Datenbrille verwendet wird, welche drahtlos mit dem zumindest einen Server des Zugangskontrollsystems und der zumindest einen Zugangskontrollvorrichtung zum Zweck der Datenkommunikation verbunden wird und von dem zumindest einen Server und/oder der zumindest einen Zugangskontrollvorrichtung in Echtzeit Daten empfängt, die die Überwachung des Zugangskontrollsystems ermöglichen, wobei diese Daten mittels einer Anzeigevorrichtung der Datenbrille dem Benutzer der Datenbrille angezeigt werden können. Das Zugangskontrollsystem ist vorzugsweise als ID-basiertes Zugangskontrollsystem ausgeführt.

Hierbei kann der Benutzer zwischen unterschiedlichen Ansichten wählen und das Zugangskontrollsystem steuern, wobei die entsprechenden Befehle zur Auswahl der Ansichten, die über die Anzeigevorrichtung angezeigt werden und die Steuerbefehle an den zumindest einen Server des Zugangskontrollsystems und/oder an die zumindest eine Zugangskontrollvorrichtung mittels Sprachsteuerung über das integrierte Mikrofon, mittels Gestensteuerung mittels der integrierten Kamera oder mittels Eye-Tracking eingegeben werden können. In einer nicht beanspruchten Variante werden die Steuerbefehle mittels Betätigung des integrierten Touchpads eingegeben. Im Rahmen des Eye-Tracking kann beispielsweise eine virtuelle Tastatur angezeigt werden, wobei eine Taste der Tastatur ausgewählt wird, wenn der Blick des Benutzers auf diese Taste für eine vorgegebene Zeitdauer fixiert ist. Bei einer angezeigten Auswahl an Befehlen oder Menüpunkten wird ein Befehl oder ein Menüpunkt ausgewählt, wenn der Blick des Benutzers auf einen Befehl bzw. einen Menüpunkt für eine vorgegebene Zeitdauer fixiert ist.

Die Steuerung des Zugangskontrollsystems kann vom Benutzer initiiert werden oder als Reaktion auf Mitteilungen oder Aufforderungen des zumindest einen Servers und/oder der zumindest einen Zugangskontrollvorrichtung des Zugangskontrollsystems, die dem Benutzer über die Anzeigevorrichtung angezeigt werden, erfolgen. Für den Fall, dass das Zugangskontrollsystem über den zumindest einen Server und/oder die zumindest eine Zugangskontrollvorrichtung an die Datenbrille Mitteilungen übermittelt, welche eine Handlung seitens des Benutzers erfordern, werden diese Mitteilungen und die verfügbaren Steuerbefehle dem Benutzer unmittelbar angezeigt. Derartige Mitteilungen können Mitteilungen über definierte Ereignisse oder Unregelmäßigkeiten im Zugangskontrollsystem, beispielsweise über eine blockierte oder defekte Zugangskontrollvorrichtung, über Betrugsversuche, Vandalismus oder über die Erfassung von ungültigen Zugangsberechtigungen sein.

Gemäß der Erfindung wird durch die Datenbrille eine Zugangskontrolle durchgeführt, wobei zu diesem Zweck mittels der integrierten Kamera Zugangsberechtigungen umfassend einen Barcode oder Zugangsberechtigungen basierend auf RFID- oder Bluetooth Low Energy (BLE)-Standards ausgelesen werden können, wobei insbesondere im offline-Fall, d.h., wenn keine Verbindung zum Server besteht, die Auswertung der Gültigkeit in der Datenbrille, mittels Barcode-Lesesoftware bzw. Software zur Auswertung von RFID- oder Bluetooth Low Energy (BLE)- Zugangsberechtigungen und einer in einem Speichermittel der Datenbrille abgelegten Positiv/Negativliste, die vom zumindest einen Server in regelmäßigen Abständen oder durch eine entsprechende Steuerung seitens des Benutzers aktualisiert wird, erfolgt. Im online-Fall, d.h., wenn eine Verbindung zum zumindest einen Server besteht, werden die Aufnahme des Barcodes bzw. die ausgelesenen Informationen der RFID- oder Bluetooth Low Energy (BLE)- Zugangsberechtigungen zusammen mit einer ID der entsprechenden Zugangskontrollvorrichtung an den zumindest einen Server übermittelt, wobei anhand der im Server erfolgten Auswertung bezüglich der Gültigkeit der Zugangsberechtigung Zugang gewährt oder verweigert wird. Der Zugang wird über eine durch die Datenbrille steuerbare Zugangskontrollvorrichtung gewährt.

Analog zur Vorgehensweise bei der Zugangskontrolle können im Gebiet eines Zugangskontrollsystems die Zugangsberechtigungen von Personen, z.B. im Rahmen von Stichproben überprüft werden.

Ferner können in einem offline-Fall die erfassten Zugangsberechtigungen in der Datenbrille nach Plausibilitäts-Parametern hinsichtlich der Gültigkeit analysiert werden, und es wird der Zugang gewährt, wenn vorgegebene Parameter vorgegebene Werte aufweisen oder innerhalb eines vorgegebenen Wertebereiches liegen. Beispielsweise wird für den Fall, dass die Zugangsberechtigung eine Tageskarte ist und das Gültigkeitsdatum dem aktuellen Datum entspricht, der Zugang gewährt. Die erfassten Daten der Zugangsberechtigung werden für eine spätere Auswertung in der Datenbrille zwischengespeichert und bei Wiederherstellung der online-Verbindung auf den zumindest einen Server eingespielt.

Das System zur Durchführung des erfindungsgemäßen Verfahrens wird wie in Anspruch 8 beschrieben ausgeführt.

Die Erfindung wird im Folgenden anhand der beigefügten Figuren beispielshaft näher erläutert. Es zeigen:
Figur 1: eine schematische Darstellung der wichtigsten Bauteile einer Datenbrille und der Anbindung der Datenbrille an ein Zugangskontrollsystem; und
Figur 2: eine Darstellung der Verwendung einer Datenbrille zur Überwachung der Ergebnisse der Zugangskontrolle bei einem Zugangskontrollsystem.

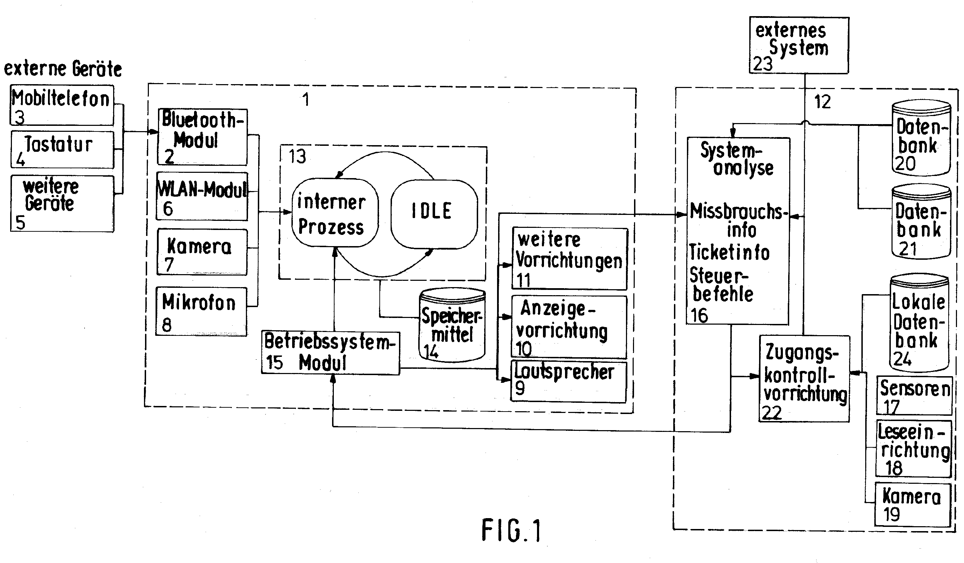

Gemäß der Erfindung und bezugnehmend auf Figur 1 umfasst eine Datenbrille 1 einen Prozessor 13 und Speichermittel 14 und kann mittels eines Bluetooth-Moduls 2 mit externen Geräten zum Zweck der Datenkommunikation verbunden werden, wie beispielsweise mit einem Mobiltelefon 3, einer Tastatur 4 und weiteren Geräten 5.

Die Datenbrille umfasst 1 eine Digitalkamera 7 sowie ein Mikrofon 8, wobei zur Datenausgabe ein Lautsprecher 9, eine Anzeigevorrichtung 10. Vorzugsweise können weitere geeignete Vorrichtungen 11 vorgesehen sein. Die Datenbrille umfasst ferner ein Betriebssystem-Modul 15. Das Zugangskontrollsystem 12 umfasst beim gezeigten Beispiel einen Server 16, sowie Datenbanken 20, 21 und zumindest eine Zugangskontrollvorrichtung 22, welche mit Sensoren 17, Leseeinrichtungen 18 für Zugangsberechtigungen und Kameras 19 verbindbar ist. Die zumindest eine Zugangskontrollvorrichtung 22 ist bei dem gezeigten Beispiel mit einer lokalen Datenbank 24 verbunden, auf der eine Positiv/Negativ-Liste oder eine so genannte Whitelist abgelegt ist, mittels der insbesondere im offline-Fall der Gültigkeitszustand einer Zugangsberechtigung über die ID der Zugangsberechtigung ermittelt wird.

Der Server 16 des Zugangskontrollsystems 12 ist mit der Datenbrille 1 vorzugsweise über ein WLAN-Modul 6 der Datenbrille 1 zum Zweck der Datenkommunikation verbunden, wobei die Datenbrille 1 über die zumindest eine Zugangskontrollvorrichtung 22 oder den zumindest einen Server 16 auch mit weiteren, externen Systemen 23, beispielsweise mit Datenbanken von Bezahlsystemen vorzugsweise über WLAN zum Zweck der Datenkommunikation verbunden sein kann. Ferner ist die Datenbrille 1 über WLAN mit der zumindest einen Zugangskontrollvorrichtung 22 verbunden, wodurch gewährleistet wird, dass auch bei einem Ausfall der Verbindung zum zumindest einen Server 16 die zumindest eine Zugangskontrollvorrichtung 22 mittels der Datenbrille 1 überwacht und gesteuert werden kann. Die drahtlose Verbindung zwischen der Datenbrille 1 und dem Server 16 und/oder der zumindest einen Zugangskontrollvorrichtung 22 kann auch über GSM-Standards erfolgen, wobei in diesem Fall die Datenbrille 1 ein entsprechendes Modul aufweist.

Die Befehle zur Auswahl der Ansichten in der Anzeigevorrichtung 10 der Datenbrille 1 und die Steuerbefehle an den zumindest einen Server 16 des Zugangskontrollsystems 12 und/oder an die zumindest eine Zugangskontrollvorrichtung 22 können mittels Sprachsteuerung über das integrierte Mikrofon 8, mittels Gestensteuerung über die integrierte Kamera 7 und entsprechender Software zur Auswertung der erfassten Gesten, mittels Betätigung des integrierten Touchpads oder mittels Eye-Tracking eingegeben werden.

Befehle zur Auswahl der Ansichten in der Anzeigevorrichtung 10 der Datenbrille 1 und die Steuerbefehle an den zumindest einen Server 16 des Zugangskontrollsystems 12 und/oder an die zumindest eine Zugangskontrollvorrichtung 22 können auch über mittels des Bluetooth-Moduls 2 oder WLAN mit der Datenbrille 1 verbundene Eingabegeräte, z.B. über eine Tastatur 4 oder ein Mobiltelefon 3 eingegeben werden, wobei in diesem Fall die Steuerbefehle über die Datenbrille 1 an den zumindest einen Server 16 und/oder an die zumindest eine Zugangskontrollvorrichtung 22 des Zugangskontrollsystems 12 übermittelt werden. Ferner können die Befehle zur Auswahl der Ansichten in der Anzeigevorrichtung 10 der Datenbrille 1 und die Steuerbefehle an den zumindest einen Server 16 des Zugangskontrollsystems 12 und/oder an die zumindest eine Zugangskontrollvorrichtung 22 mittels einer Fernbedienung, die wie eine Uhr am Handgelenk des Benutzers der Datenbrille 1 getragen wird und mit der Datenbrille 1 drahtlos, vorzugsweise über WLAN oder Bluetooth verbunden ist, eingegeben werden. Beispielsweise kann die Fernbedienung lediglich vier Tasten zum Scrollen zwischen Menüeinträgen aufweisen, die mittels der Anzeigevorrichtung 10 der Datenbrille 1 angezeigt werden, nämlich jeweils eine für eine der Richtungen "nach oben, nach unten, nach links und nach rechts". Zum Auswählen bzw. Anklicken eines Steuerbefehls bzw. eines Menüeintrags ist in diesem Fall, eine weitere, fünfte Taste vorgesehen.

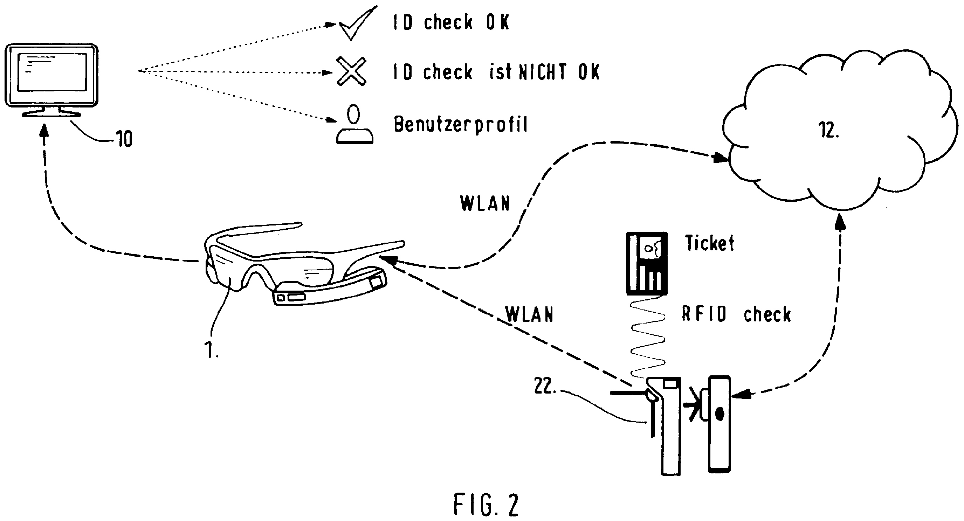

Gemäß der Erfindung und bezugnehmend auf Figur 2 kann ein Benutzer mittels der Datenbrille 1 ein Zugangskontrollsystem 12 überwachen, wobei die entsprechenden Informationen über die Anzeigevorrichtung 10 der Datenbrille 1 angezeigt werden. Bei dem in Figur 2 gezeigten Beispiel werden dem Benutzer der Datenbrille 1 die Ergebnisse der online oder offline durchgeführten Zugangskontrolle bei einer Zugangskontrollvorrichtung 22 eines Zugangskontrollsystems 12 für Skilifte angezeigt. Beispielsweise kann der Benutzer die Zugangskontrollvorrichtung 22 über eine WLAN Verbindung anhand der vom Server 16 des Zugangskontrollsystems 12 oder von der Zugangskontrollvorrichtung 22 direkt gelieferten Daten überwachen, um festzustellen, ob die aktuell erfassten Zugangsberechtigungen gültig sind oder nicht, wobei die Zugangsberechtigungen jeglicher Art, beispielsweise Bluetooth-Low-Energy-, RFID- oder Barcode- Zugangsberechtigungen sein können.

Für den Fall, dass eine Zugangskontrollvorrichtung 22 oder der zumindest eine Server 16 offline sind, werden in der Zugangskontrollvorrichtung 22 die erfassten Zugangsberechtigungen nach Plausibilitäts-Parametern hinsichtlich der Gültigkeit analysiert, und es wird der Zugang gewährt, wenn vorgegebene Parameter vorgegebene Werte aufweisen oder innerhalb eines vorgegebenen Wertebereiches liegen. Die erfassten Daten der Zugangsberechtigungen werden für eine spätere Auswertung in der Zugangskontrollvorrichtung 22 zwischengespeichert und bei Wiederherstellung der online-Verbindung auf den Server 16 eingespielt.

Ferner kann in einem Speichermittel bzw. in einer Datenbank 24 der zumindest einen Zugangskontrollvorrichtung 22 eine Positiv/Negativ-Liste oder eine so genannte Whitelist abgelegt sein, mittels der der Gültigkeitszustand einer Zugangsberechtigung über die ID der Zugangsberechtigung ermittelt wird, welche vom zumindest einen Server in regelmäßigen Abständen oder durch eine entsprechende Steuerung der Zugangskontrollvorrichtung 22 aktualisiert wird. Auf diese Weise kann, wenn eine Zugangskontrollvorrichtung 22 oder ein Server 16 offline sind der Zugang gewährt werden, wenn anhand der Positiv/Negativ-Liste oder der Whitelist die Zugangsberechtigung als gültig bezeichnet ist. Bei Wiederherstellung der online-Verbindung werden die erfassten Daten der Zugangsberechtigungen an den zumindest einen Server 16 übermittelt.

Erfindungsgemäß kann der Benutzer durch entsprechende Steuerung über die Anzeigevorrichtung 10 der Datenbrille 1 das der jeweiligen bei der Zugangskontrolle mittels einer Zugangskontrollvorrichtung 22 erfassten Zugangsberechtigung zugeordnete Profil ansehen. Für den Fall, dass das Zugangskontrollsystem 12 mehrere Zugangskontrollvorrichtungen 22 aufweist, kann der Benutzer der Datenbrillel durch Eingabe eines entsprechenden Befehls bestimmen, welche Zugangskontrollvorrichtung 22 gezielt überwacht werden soll. Ferner ist es möglich, dass nur für den Fall des Auftretens von definierten Ereignissen, beispielsweise bei einer ungültigen von einer Zugangskontrollvorrichtung 22 ausgelesenen Zugangsberechtigung, der Benutzer mittels der Anzeigevorrichtung 10 der Datenbrille 1 und optional durch ein akustisches Signal über diese Ereignisse informiert wird.

Beispielsweise kann der Benutzer mittels der Anzeigevorrichtung 10 der Datenbrille 1 informiert werden, ob bei der online- oder offline-Erfassung einer Bluetooth-Low-Energy-, einer RFID-, einer Barcode- oder einer sonstigen, nach dem Stand der Technik ausgeführten Zugangsberechtigung über eine Zugangskontrollvorrichtung 22 des Zugangskontrollsystems 12 Probleme aufgetreten sind. Gemäß der Erfindung kann der Benutzer der Datenbrille 1 das Zugangskontrollsystem 12 steuern und beispielsweise bei einer ungültigen Zugangsberechtigung den Zugang manuell gewähren, das der jeweiligen Zugangsberechtigung zugeordnete Profil ansehen, ein Live Bild mittels einer der Zugangskontrollvorrichtung zugeordneten Kamera 19 über die Anzeigevorrichtung 10 der Datenbrille 1 betrachten und/oder über das Mikrofon 8 der Datenbrille 1 und eine Lautsprechereinrichtung der Zugangskontrollvorrichtung 22 Anweisungen an die Person geben, welche die Zugangsberechtigung besitzt. Für den Fall, dass die Zugangskontrollvorrichtung ein Mikrofon aufweist, kann eine bidirektionale Kommunikation hergestellt werden. Die Steuerbefehle können z.B. mittels Sprachsteuerung über das integrierte Mikrofon 8, mittels Gestensteuerung mittels der integrierten Kamera 7, mittels Betätigung des integrierten Touchpads oder mittels Eye-Tracking eingegeben werden.

Gemäß der Erfindung kann in der Datenbrille 1 Software, beispielsweise in Form von sogenannten Apps installiert sein. Beispielsweise kann eine Software zum Auslesen von Barcodes installiert sein; hierbei kann mittels der in die Datenbrille 1 integrierten Kamera 7 ein Barcode einer Zugangsberechtigung ausgelesen werden, wobei im offline-Fall (d.h. es besteht keine Verbindung zum Server 16) anhand einer Positiv/Negativ-Liste oder einer Whitelist, die in einem Speichermittel 14 der Datenbrille 1 abgelegt ist und vom Server 16 in regelmäßigen Abständen oder durch eine entsprechende Steuerung seitens des Benutzers aktualisiert wird, der Barcode ausgewertet wird, wobei anhand der Auswertung bei gültiger Zugangsberechtigung eine Zugangskontrollvorrichtung 22 mittels der Verbindung zwischen der Datenbrille 1 und der Zugangskontrollvorrichtung 22 im Öffnungssinne betätigt wird oder der Zugang manuell gewährt wird und bei Wiederherstellung einer online Verbindung zum zumindest einen Server die Datenbank des Zugangskontrollsystems mit einer ID-Nummer der Zugangsberechtigung und dem Auswerteergebnis aktualisiert wird. Im online-Fall, (d.h. es besteht eine Verbindung zum Server 16) werden die im Barcode enthaltenen Informationen und eine ID der entsprechenden Zugangskontrollvorrichtung vorzugsweise zur Auswertung an den Server 16 des Zugangskontrollsystems 12 übermittelt. Anhand der Auswertung im Server 16 des Zugangskontrollsystems 12 wird die entsprechende Zugangskontrollvorrichtung 22 im Öffnungssinne betätigt oder es wird der Zutritt verweigert.

Für den Fall, dass in der Datenbrille 1 keine Barcode-Lesesoftware installiert ist, wird mittels der Kamera erkannt, dass sich ein Barcode im Erfassungsfeld der Kamera 7 befindet und anschließend wird eine Aufnahme des Barcodes gemacht und zusammen mit einer ID der entsprechenden Zugangskontrollvorrichtung 22 zur Auswertung an den Server 16 des Zugangskontrollsystems 12 übermittelt. Anhand der Auswertung im Server 16 des Zugangskontrollsystems 22 wird die entsprechende Zugangskontrollvorrichtung 22 im Öffnungssinne betätigt oder es wird der Zutritt verweigert. Wenn in der Datenbrille 1 keine Barcode-Lesesoftware installiert ist und der zumindest eine Server offline ist, können die erfassten Zugangsberechtigungen in der Datenbrille 1 nach Plausibilitäts-Parametern hinsichtlich der Gültigkeit analysiert werden, und es wird mittels der Verbindung zwischen der Datenbrille 1 und der jeweiligen Zugangskontrollvorrichtung 22 der Zugang gewährt, wenn vorgegebene Parameter vorgegebene Werte aufweisen oder innerhalb eines vorgegebenen Wertebereiches liegen.

Im Rahmen einer weiteren Ausgestaltung der Erfindung kann mittels eines Bluetooth-Low-Energy-Moduls der Datenbrille 1 eine Zugangsberechtigung über Bluetooth-Low-Energy (BLE) Standards ausgelesen werden, wobei die ausgelesene Information mittels der Anzeigevorrichtung 10 der Datenbrille 1 angezeigt wird und die Information zusammen mit einer ID der entsprechenden Zugangskontrollvorrichtung 22 an den zumindest einen Server 16 des Zugangskontrollsystems übermittelt wird. Die an den Server 16 übermittelte Information wird im Server 16 ausgewertet, wobei anhand des Resultates das Zugangskontrollsystem 12 gesteuert wird, um für den Fall einer gültigen Zugangsberechtigung Zugang zu gewähren. Alternativ kann, insbesondere im offline-Fall, d.h., wenn keine Verbindung zum Server 16 besteht, anhand einer Positiv/Negativ-Liste oder einer Whitelist, die in einem Speichermittel 14 der Datenbrille 1 abgelegt ist und vom Server 16 in regelmäßigen Abständen oder durch eine entsprechende Steuerung seitens des Benutzers der Datenbrille 1 aktualisiert wird, die ausgelesene Zugangsberechtigung ausgewertet werden, wobei anhand der Auswertung bei gültiger Zugangsberechtigung eine entsprechende Zugangskontrollvorrichtung 22 im Öffnungssinne betätigt wird und bei Wiederherstellung einer online Verbindung zum zumindest einen Server 16 die Datenbank des Zugangskontrollsystems 12 mit einer ID-Nummer der Zugangsberechtigung und dem Auswerteergebnis aktualisiert wird.

Im Rahmen der Erfindung wird insbesondere wenn keine Verbindung zum zumindest einen Server 16 besteht, mittels der Verbindung zwischen der Datenbrille 1 und einer Zugangskontrollvorrichtung 22 anhand einer Positiv/Negativ-Liste oder einer Whitelist, die in einem Speichermittel einer Zugangskontrollvorrichtung 22 des Zugangskontrollsystems abgelegt ist und vom Server 16 in regelmäßigen Abständen oder durch eine entsprechende Steuerung seitens des Benutzers aktualisiert wird, die ausgelesene Zugangsberechtigung ausgewertet werden.

Gemäß der Erfindung kann in die Datenbrille 1 eine HF- oder UHF - RFID-Leseeinrichtung integriert sein, wobei mittels der RFID-Leseeinrichtung eine Zugangsberechtigung ausgelesen werden kann, wobei die ausgelesene Information mittels der Anzeigevorrichtung 10 der Datenbrille 1 angezeigt wird und die Information zusammen mit einer ID der entsprechenden Zugangskontrollvorrichtung 22 an den zumindest einen Server 16 des Zugangskontrollsystems 12 übermittelt wird. Die an den Server 16 übermittelte Information wird im Server 16 ausgewertet, wobei anhand des Resultates das Zugangskontrollsystem gesteuert wird, um für den Fall einer gültigen Zugangsberechtigung Zugang zu gewähren. Alternativ kann, insbesondere im offline-Fall, d.h., wenn keine Verbindung zum Server besteht, anhand einer Positiv/Negativ-Liste oder einer Whitelist, die in der Datenbrille abgelegt ist und vom Server in regelmäßigen Abständen oder durch eine entsprechende Steuerung seitens des Benutzers aktualisiert wird, die ausgelesene Zugangsberechtigung in der Datenbrille 1 ausgewertet werden, wobei bei gültiger Zugangsberechtigung eine entsprechende Zugangskontrollvorrichtung 22 im Öffnungssinne betätigt wird und bei Wiederherstellung einer online Verbindung zum zumindest einen Server die Datenbank des Zugangskontrollsystems 12 mit einer ID-Nummer der Zugangsberechtigung und dem Auswerteergebnis aktualisiert wird.

Im Rahmen einer weiteren Ausgestaltung der Erfindung kann im Rahmen der Zugangskontrolle von Bluetooth-Low-Energy-, RFID-, Barcode- oder sonstigen Zugangsberechtigungen mittels der in die Datenbrille 1 integrierten Kamera 7 eine Gesichtserkennung durchgeführt werden, wobei bei Erkennung der Anwesenheit einer Person im Erfassungsfeld der Kamera 7 eine Aufnahme des Gesichtes der Person erstellt wird und für den Fall, dass in der Datenbrille 1 eine Gesichtserkennungssoftware installiert ist, mittels einer in der Datenbrille 1 installierten Gesichtserkennungssoftware eine Gesichtserkennung durchgeführt und das aufgenommene Bild der Person mit einem mit der Zugangsberechtigung assoziierten, als Referenzbild dienenden Gesichtsbild verglichen wird und Zugang gewährt wird, wenn das Referenzbild mit dem aufgenommenen Bild der Person übereinstimmt und eine gültige Zugangsberechtigung vorliegt.

Für den Fall, dass in der Datenbrille 1 keine Gesichtserkennungssoftware installiert ist, wird die Aufnahme an den zumindest einen Server 16 zur Gesichtserkennung übermittelt; im Server 16 wird das aufgenommene Bild der Person mit einem mit der Zugangsberechtigung assoziierten, als Referenzbild dienenden Gesichtsbild, was in einer Datenbank 21 abgelegt sein kann, verglichen und der Zugang über die entsprechende Zugangskontrollvorrichtung 22 gewährt, wenn das Referenzbild mit dem aufgenommenen Bild der Person übereinstimmt und eine gültige Zugangsberechtigung vorliegt.

Im Rahmen einer Weiterbildung der Erfindung werden bei der Zugangskontrolle mittels einer der jeweiligen Zugangskontrollvorrichtung 22 des Zugangskontrollsystems 12 zugeordneten Kamera Gesichtsaufnahmen der Personen erstellt, deren Zugangsberechtigung ausgewertet werden soll, wobei diese Aufnahmen an die Datenbrille 1 übermittelt werden und gleichzeitig mit einem mit der erfassten ID der Zugangsberechtigung assoziierten, als Referenzbild dienenden Gesichtsbild über die Anzeigevorrichtung der Datenbrille 1 angezeigt, wodurch der Benutzer der Datenbrille 1 den Zugang über die Zugangskontrollvorrichtung 22 gewähren kann, wenn das Referenzbild mit dem aufgenommenen Bild der Person übereinstimmt und eine gültige Zugangsberechtigung vorliegt.

Zugangskontrollsysteme im Sinne der Erfindung sind beispielsweise Zugangskontrollsysteme für Skigebiete, für Messen und Sportveranstaltungen sowie für Parkhäuser und Parkanlagen, wobei für den Fall von Parkhäusern und Parkanlagen die Parksäulen und Fahrzeugschranken als Zugangskontrollvorrichtungen dienen und überwacht werden. Ferner kann mittels des erfindungsgemäßen Verfahrens auch der Betrieb von Bezahlautomaten des Zugangskontrollsystems, die mit dem zumindest einen Server zum Zweck der Datenkommunikation verbunden sind, überwacht werden.

## Patentansprüche

1. Verfahren zur Überwachung und Steuerung eines Zugangskontrollsystems (12), umfassend zumindest einen Server (16) und zumindest eine mit dem zumindest einen Server (16) zum Zweck der Datenkommunikation verbindbare Zugangskontrollvorrichtung (22), wobei zur Überwachung und Steuerung des Zugangskontrollsystems eine Datenbrille (1) verwendet wird, welche drahtlos mit dem zumindest einen Server (16) des Zugangskontrollsystems (12) und der zumindest einen Zugangskontrollvorrichtung (22) zum Zweck der Datenkommunikation verbunden wird und von dem zumindest einen Server (16) und/oder der zumindest einen Zugangskontrollvorrichtung (22) in Echtzeit Daten empfängt, die die Überwachung des Zugangskontrollsystems (12) ermöglichen, wobei diese Daten mittels einer Anzeigevorrichtung (10) der Datenbrille (1) dem Benutzer der Datenbrille (1) angezeigt werden können, wobei das Zugangskontrollsystem (12) durch mittels der Datenbrille (1) eingebbare Steuerbefehle, die an den zumindest einen Server (16) und/oder an die zumindest eine Zugangskontrollvorrichtung (22) übermittelt werden, gesteuert werden kann, wobei die Steuerbefehle mittels Sprachsteuerung über ein in die Datenbrille (1) integriertes Mikrofon (8), mittels Gestensteuerung über eine in die Datenbrille (1) integrierte Kamera (7) oder mittels Eye-Tracking eingegeben werden, **dadurch gekennzeichnet, dass** mittels der Datenbrille (1) eine Zugangskontrolle durchgeführt wird, wobei zu diesem Zweck mittels der in der Datenbrille (1) integrierten Kamera Zugangsberechtigungen umfassend einen Barcode oder mittels eines in die Datenbrille (1) integrierten Bluetooth-Low-Energy-Moduls oder einer in die Datenbrille (1) integrierten HF- oder UHF - RFID-Leseeinrichtung Zugangsberechtigungen basierend auf Bluetooth Low Energy (BLE)- oder RFID- Standards ausgelesen werden, wobei die Auswertung der Gültigkeit der Zugangsberechtigungen in der Datenbrille (1) mittels Barcode-Lesesoftware bzw. Software zur Auswertung von RFID- oder Bluetooth Low Energy (BLE)- Zugangsberechtigungen und einer in einem Speichermittel (14) der Datenbrille (1) abgelegten Positiv/Negativliste oder Whitelist, die vom zumindest einen Server (16) in regelmäßigen Abständen oder durch eine entsprechende Steuerung seitens des Benutzers aktualisiert wird, erfolgt oder wobei die Aufnahme des Barcodes bzw. die ausgelesenen Informationen der RFID- oder Bluetooth Low Energy (BLE)- Zugangsberechtigungen an den zumindest einen Server (16) übermittelt werden und anhand der in der Datenbrille (1) oder im Server (16) erfolgten Auswertung bezüglich der Gültigkeit der Zugangsberechtigung Zugang gewährt oder verweigert wird.

2. Verfahren zur Überwachung und Steuerung eines Zugangskontrollsystems (12) nach Anspruch 1, **dadurch gekennzeichnet, dass** die Steuerbefehle über mittels eines Bluetooth-Moduls (2) der Datenbrille (1) oder WLAN mit der Datenbrille (1) verbundene Eingabegeräte eingegeben werden, wobei die Steuerbefehle über die Datenbrille (1) an den zumindest einen Server (16) und/oder an die zumindest eine Zugangskontrollvorrichtung (22) des Zugangskontrollsystems (12) übermittelt werden.

3. Verfahren zur Überwachung und Steuerung eines Zugangskontrollsystems (12) nach Anspruch 1 oder 2, **dadurch gekennzeichnet, dass** die Steuerung des Zugangskontrollsystems (12) vom Benutzer der Datenbrille (1) initiiert wird oder als Reaktion auf Mitteilungen oder Aufforderungen des zumindest einen Servers (16) und/oder der zumindest einen Zugangskontrollvorrichtung (22) des Zugangskontrollsystems (12), die dem Benutzer über die Anzeigevorrichtung (10) der Datenbrille (1) angezeigt werden, durchgeführt wird, wobei, wenn das Zugangskontrollsystem (12) über den zumindest einen Server (16) an die Datenbrille (1) Mitteilungen übermittelt, welche eine Handlung seitens des Benutzers erfordern, diese Mitteilungen und die verfügbaren Steuerbefehle dem Benutzer unmittelbar angezeigt werden.

4. Verfahren zur Überwachung und Steuerung eines Zugangskontrollsystems (12) nach Anspruch 1, 2 oder 3, **dadurch gekennzeichnet, dass** mittels der Anzeigevorrichtung (10) der Datenbrille (1) der Benutzer der Datenbrille (1) informiert wird, ob bei der Erfassung einer Bluetooth-Low-Energy-, einer RFID-, einer Barcode- oder einer sonstigen Zugangsberechtigung über eine Zugangskontrollvorrichtung (22) des Zugangskontrollsystems Probleme aufgetreten sind.

5. Verfahren zur Überwachung und Steuerung eines Zugangskontrollsystems (12) nach Anspruch 4, **dadurch gekennzeichnet, dass** der Benutzer der Datenbrille (1) bei einer ungültigen Zugangsberechtigung den Zugang manuell gewähren, das der jeweiligen Zugangsberechtigung zugeordnete Profil ansehen, ein Live Bild mittels einer der Zugangskontrollvorrichtung (22) zugeordneten Kamera über die Anzeigevorrichtung (10) der Datenbrille (1) betrachten und/oder über das Mikrofon (8) der Datenbrille (1) und eine Lautsprechereinrichtung der Zugangskontrollvorrichtung (22) Anweisungen an die Person geben kann, welche die Zugangsberechtigung besitzt.

6. Verfahren zur Überwachung und Steuerung eines Zugangskontrollsystems (12) nach Anspruch 1, **dadurch gekennzeichnet, dass** mittels der in die Datenbrille (1) integrierten Kamera (7) eine Gesichtserkennung durchgeführt wird, wobei bei Erkennung der Anwesenheit einer Person im Erfassungsfeld der Kamera (7) eine Aufnahme des Gesichtes der Person erstellt wird, wobei für den Fall, dass in der Datenbrille (1) eine Gesichtserkennungssoftware installiert ist, mittels der in der Datenbrille (1) installierten Gesichtserkennungssoftware eine Gesichtserkennung durchgeführt wird oder für den Fall, dass in der Datenbrille (1) keine Gesichtserkennungssoftware installiert ist, die Aufnahme an den zumindest einen Server (16) zur Gesichtserkennung übermittelt wird, wobei das aufgenommene Bild der Person mit einem mit der Zugangsberechtigung assoziierten, als Referenzbild dienenden Gesichtsbild verglichen wird und Zugang gewährt wird, wenn das Referenzbild mit dem aufgenommenen Bild der Person übereinstimmt und eine gültige Zugangsberechtigung vorliegt.

7. Verfahren zur Überwachung und Steuerung eines Zugangskontrollsystems (12) nach einem der Ansprüche 1 bis 6, **dadurch gekennzeichnet, dass** bei der Zugangskontrolle mittels einer der jeweiligen Zugangskontrollvorrichtung (22) des Zugangskontrollsystems (12) zugeordneten Kamera Gesichtsaufnahmen der Personen erstellt werden, deren Zugangsberechtigung ausgewertet werden soll, wobei diese Aufnahmen an die Datenbrille (1) übermittelt werden und gleichzeitig mit einem mit einer erfassten ID der Zugangsberechtigung assoziierten, als Referenzbild dienenden Gesichtsbild über die Anzeigevorrichtung (10) der Datenbrille (1) angezeigt werden, wodurch der Benutzer der Datenbrille (1) den Zugang gewähren kann, wenn das Referenzbild mit dem aufgenommenen Bild der Person übereinstimmt und eine gültige Zugangsberechtigung vorliegt.

8. System mit einer Zugangskontrollvorrichtung, einem Server und einer Datenbrille **gekennzeichnet dadurch, dass** das System zur Durchführung des Verfahrens nach einem der vorangehenden Ansprüche konfiguriert ist, und dass die Datenbrille (1) einen Prozessor (13), Speichermittel (14), ein Bluetooth-Modul (2), eine Digitalkamera (7), ein Mikrofon (8), einen Lautsprecher (9), eine Anzeigevorrichtung (10) und ein WLAN-Modul (6) umfasst, wobei in die Datenbrille (1) ein Bluetooth-Low-Energy-Modul zum Auslesen von Zugangsberechtigungen basierend auf Bluetooth Low Energy -Standards und/oder eine HF- oder UHF - RFID-Leseeinrichtung integriert ist und wobei die Zugangskontrollvorrichtung, der Server und die Datenbrille konfiguriert sind das Verfahren nach einem der vorangehenden Ansprüche durchzuführen.

9. System nach Anspruch 8, **dadurch gekennzeichnet, dass** es eine Fernbedienung umfasst, über die Befehle zur Auswahl der Ansichten in der Anzeigevorrichtung (10) der Datenbrille (1) und die Steuerbefehle an den zumindest einen Server (16) und/oder an die zumindest eine Zugangskontrollvorrichtung (22) eingebbar sind, welche wie eine Uhr am Handgelenk des Benutzers der Datenbrille (1) getragen wird und mit der Datenbrille (1) drahtlos verbunden ist.

## Claims

1. A method for monitoring and controlling an access control system (12), comprising at least one server (16) and at least one access control device (22), which can be connected to the at least one server (16) for the purpose of data communication, smart glasses (1) being used for monitoring and controlling the access control system, which is connected wirelessly to the at least one server (16) of the access control system (12) and the at least one access control device (22) for the purpose of data communication and receives data from the at least one server (16) and/or the at least one access control device (22) in real time, which data enable the monitoring of the access control system (12), it being possible to display these data to the user of the smart glasses (1) by means of a display device (10) of the smart glasses (1), it being possible to control the access control system (12) by control commands, which can be input by means of the smart glasses (1) and are transmitted to the at least one server (16) and/or to the at least one access control device (22), the control commands being input by means of voice control via a microphone (8) integrated into the smart glasses (1), by means of gesture control via a camera (7) integrated into the smart glasses (1) or by means of eye tracking, **characterized in that** access control is carried out by means of the smart glasses (1), wherein, for this purpose, access authorizations comprising a bar code are read out by means of the camera integrated in the smart glasses (1) or access authorizations based on Bluetooth low energy (BLE) or RFID standards are read out by means of a Bluetooth low energy module integrated into the smart glasses (1) or an HF or UHF RFID reading device integrated into the smart glasses (1), wherein the analysis of the validity of the access authorizations in the smart glasses (1) takes place by means of bar-code reading software or software for analysing RFID or Bluetooth-low-energy (BLE) access authorizations and a white/black list stored in a storage means (14) of the smart glasses (1), which is updated by at least one server (16) at regular intervals or by means of a corresponding control on the part of the user, or wherein the image of the bar code or the read-out information of the RFID or Bluetooth-low-energy (BLE) access authorizations is transmitted to the at least one server (16) and access is granted or denied on the basis of the analysis with respect to the validity of the access authorization, which took place in the smart glasses (1) or on the server (16).

2. The method for monitoring and controlling an access control system (12) according to Claim 1, **characterized in that** the control commands are input by means of input devices connected to the smart glasses (1) by means of a Bluetooth module (2) of the smart glasses (1) or WLAN, wherein the control commands are transmitted by means of the smart glasses (1) to the at least one server (16) and/or to the at least one access control device (22) of the access control system (12).

3. The method for monitoring and controlling an access control system (12) according to Claim 1 or 2, **characterized in that** the control of the access control system (12) is initiated by the user of the smart glasses (1) or is carried out as a reaction to messages or requests of the at least one server (16) and/or the at least one access control device (22) of the access control system (12), which are displayed to the user by means of the display device (10) of the smart glasses (1), wherein, if the access control system (12) transmits messages, which request an action on the part of the user, to the smart glasses (1) via the at least one server (16), these messages and the available control commands are displayed to the user directly.

4. The method for monitoring and controlling an access control system (12) according to Claim 1, 2 or 3, **characterized in that** the user of the smart glasses (1) is informed by means of the display device (10) of the smart glasses (1), whether problems have arisen during the detection of a Bluetooth-low-energy, an RFID, a bar-code or another access authorization by means of an access control device (22) of the access control system.

5. The method for monitoring and controlling an access control system (12) according to Claim 4, **characterized in that** in the case of an invalid access authorization, the user of the smart glasses (1) can manually grant access, view the profile assigned to the respective access authorization, look at a live image by means of a camera assigned to the access control device (22) via the display device (10) of the smart glasses (1) and/or give instructions to the person who has the access authorization by means of the microphone (8) of the smart glasses (1) and a loudspeaker device of the access control device (22).

6. The method for monitoring and controlling an access control system (12) according to Claim 1, **characterized in that** facial recognition is carried out by means of the camera (7) integrated into the smart glasses (1), wherein, when the presence of a person is detected in the detection field of the camera (7), an image of the face of the person is created, wherein, in the event that facial recognition software is installed in the smart glasses (1), facial recognition is carried out by means of the facial recognition software installed in the smart glasses (1) or, in the event that no facial recognition software is installed in the smart glasses (1), the image is transmitted to the at least one server (16) for facial recognition, wherein the image of the person which was taken is compared with an image of the face, which is associated with the access authorization and used as reference image, and access is granted if the reference image matches the image of the person, which was taken, and a valid access authorization is present.

7. The method for monitoring and controlling an access control system (12) according to one of Claims 1 to 6, **characterized in that** during access control, images of the faces of the people whose access authorization should be evaluated are created by means of a camera assigned to the respective access control device (22) of the access control system (12), wherein these images are transmitted to the smart glasses (1) and are simultaneously displayed with an image of the face, which is used as reference image and is associated with a detected ID of the access authorization, by means of the display device (10) of the smart glasses (1), as a result of which the user of the smart glasses (1) can grant access if the reference image matches the image of the person which was taken and a valid access authorization is present.

8. A system having an access control device, a server and smart glasses **characterized in that** the system is configured for carrying out the method according to one of the preceding claims, and **in that** the smart glasses (1) comprise a processor (13), storage means (14), a Bluetooth module (2), a digital camera (7), a microphone (8), a loudspeaker (9), a display device (10) and a WLAN module (6), wherein a Bluetooth low energy module for reading out access authorizations based on Bluetooth low energy standards and/or an HF or UHF RFID reading device is integrated into the smart glasses (1), and wherein the access control device, the server and the smart glasses are configured to carry out the method according to one of the preceding claims.

9. The system according to Claim 8, **characterized in that** the system comprises a remote control, by means of which commands for selecting views in the display device (10) of the smart glasses (1) and the control commands can be input to the at least one server (16) and/or to the at least one access control device (22), which is carried like a watch on the wrist of the user of the smart glasses (1) and is wirelessly connected to the smart glasses (1).

## Revendications

1. Procédé de surveillance et de commande d'un système de commande d'accès (12), comprenant au moins un serveur (16) et au moins un dispositif de commande d'accès (22) qui peut être connecté à au moins un serveur (16) à des fins de communication de données, dans lequel des lunettes de données (1) sont utilisées pour surveiller et commander le système de commande d'accès, qui est connecté sans fil à au moins un serveur (16) du système de commande d'accès (12) et au moins un dispositif de commande d'accès (22) à des fins de communication de données et reçoit des données d'au moins un serveur (16) et/ou du au moins un dispositif de commande d'accès (22) en temps réel, ce qui permet de surveiller le système de commande d'accès (12), lesdites données étant affichées au moyen d'un dispositif d'affichage (10) des lunettes de données (1) à l'utilisateur des lunettes de données (1), dans lequel le système de commande d'accès (12) peut être commandé par l'intermédiaire des instructions de commande qui peuvent être saisies au moyen de lunettes de données (1), qui sont transmises à au moins un serveur (16) et / ou à au moins un dispositif de commande d'accès (22), dans lequel les instructions de commande peuvent être saisies au moyen d'une commande vocale via un microphone (8) intégré dans les lunettes de données (1), au moyen d'une commande gestuelle via une caméra (7) intégrée dans les lunettes de données (1) ou au moyen d'un suivi oculaire, **caractérisé en ce qu'**une commande d'accès est effectuée au moyen des lunettes de données (1), dans lequel à cet effet, au moyen de la caméra intégrée dans les lunettes de données (1) des autorisations d'accès comprenant un code-barres ou au moyen d'un module Bluetooth à faible énergie intégré dans les lunettes de données (1) ou un lecteur HF ou UHF-RFID intégré dans les lunettes de données (1) des droits d'accès basés sur les normes Bluetooth à faible énergie (BLE) ou RFID sont lus, dans lequel l'évaluation de la validité des autorisations d'accès dans les lunettes de données (1) a lieu à l'aide d'un logiciel de lecture de codes à barres ou d'un logiciel pour évaluer les autorisations d'accès RFID ou Bluetooth À faible énergie (BLE) et une liste positive/négative ou liste blanche déposée dans un dispositif de mémorisation (14) des lunettes de données (1), qui est mise à jour par au moins un serveur (16) à intervalles réguliers ou par une commande correspondante de la part de l'utilisateur, ou dans lequel l'enregistrement du code à barres ou des informations lues à partir des autorisations d'accès RFID ou Bluetooth à faible énergie (BLE) est transmis à au moins un serveur (16) et l'accès est accordé ou refusé sur la base de l'évaluation effectuée dans les lunettes de données (1) ou dans le serveur (16) en ce qui concerne la validité de l'autorisation d'accès.

2. Procédé de surveillance et de commande d'un système de commande d'accès (12) selon la revendication 1, **caractérisé en ce que** les instructions de commande sont entrées via des dispositifs d'entrée connectés au moyen d'un module Bluetooth (2) des lunettes de données (1) ou WLAN avec les lunettes de données (1), dans lequel les instructions de commande sont transmises par l'intermédiaire des lunettes de données (1) à au moins un serveur (16) et/ou à au moins un dispositif de commande d'accès (22) du système de commande d'accès (12).

3. Procédure de surveillance et de commande d'un système de commande d'accès (12) selon la revendication 1 ou 2, **caractérisé en ce que** la commande du système de commande d'accès (12) est déclenchée par l'utilisateur des lunettes de données (1) ou est effectuée en réponse à des messages ou des demandes provenant d'au moins un serveur (16) et/ou du au moins un dispositif de commande d'accès (22) du système de commande d'accès (12), qui sont affichées à l'utilisateur via le dispositif d'affichage (10) des lunettes de données (1), dans lequel, si le système de commande d'accès (12) transmet via au moins un serveur (16) aux lunettes de données (1) des messages qui nécessitent une action de la part de l'utilisateur, ces messages et les instructions de commande disponibles sont immédiatement affichés à l'utilisateur.

4. Procédure de surveillance et de commande d'un système de commande d'accès (12) selon la revendication 1, 2 ou 3, **caractérisé en ce qu'**au moyen du dispositif d'affichage (10) des lunettes de données (1) l'utilisateur des lunettes de données (1) est informé que des problèmes sont survenus lors de la détection d'une autorisation d'accès d'un dispositif de commande d'accès Bluetooth à faible consommation d'énergie, RFID ou à code à barres par l'intermédiaire d'un dispositif de commande d'accès (22) du système de commande d'accès.

5. Procédure de surveillance et de commande d'un système de commande d'accès (12) selon la revendication 4, **caractérisé en ce que** l'utilisateur des lunettes de données (1) si l'autorisation d'accès n'est pas valide, peut accorder l'accès manuellement, afficher le profil affecté à l'autorisation d'accès respective et une image en direct à l'aide d'une caméra affectée au dispositif de commande d'accès (22) via le dispositif d'affichage (10) des lunettes de données (1) et/ou via le microphone (8) des lunettes de données (1) et un haut-parleur du dispositif de commande d'accès (22) peut donner des instructions à la personne qui a l'autorisation d'accès.

6. Procédé de surveillance et de commande d'un système de commande d'accès (12) selon la revendication 1, **caractérisé en ce qu'**une reconnaissance faciale est réalisée au moyen de la caméra (7) intégrée dans les lunettes de données (1), dans lequel la détection de la présence d'une personne dans le champ de détection de la caméra (7) est établie pour l'enregistrement du visage de la personne, dans lequel dans le cas où dans les lunettes de données (1), un logiciel de reconnaissance faciale est installé, au moyen duquel logiciel de reconnaissance faciale installé dans les lunettes de données (1) une reconnaissance faciale est effectuée ou dans le cas où aucun logiciel de reconnaissance faciale n'est installé dans les lunettes de données (1), l'enregistrement est transmis à au moins un serveur (16) pour la reconnaissance faciale, dans lequel l'image enregistrée de la personne est comparée à une image faciale associée à l'autorisation d'accès qui sert d'image de référence, et l'accès est accordé si l'image de référence concorde avec l'image enregistrée de la personne et une autorisation d'accès valide est présente.

7. Procédure de surveillance et de commande d'un système de commande d'accès (12) selon une des revendications 1 à 6, **caractérisé en ce que** lors de la commande d'accès au moyen d'un des dispositifs de commande d'accès respectifs (22) du système de commande d'accès (12), des images faciales des personnes dont l'autorisation d'accès doit être évaluée sont créées, dans lequel ces images sont transmises aux lunettes de données (1) et en même temps sont affichées avec une image faciale associée à un identifiant détecté de l'autorisation d'accès et servant d'image de référence via le dispositif d'affichage (10) des lunettes de données (1), moyennant quoi l'utilisateur des lunettes de données (1) peut accéder, si l'image de référence concorde avec l'image capturée de la personne et qu'une autorisation d'accès valide est disponible.

8. Système avec un dispositif de commande d'accès, un serveur et une lunette de données, **caractérisé en ce que** le système est configuré pour mettre en œuvre le procédé selon une des revendications précédentes, et que les lunettes de données (1) comprennent un processeur (13), des moyens de mémorisation (14), un module Bluetooth (2), un appareil photo numérique (7), un microphone (8), un haut-parleur (9), un dispositif d'affichage (10) et un module WLAN (6), dans lequel dans les lunettes de données (1) un module Bluetooth à faible énergie pour lire les autorisations d'accès basées sur les normes Bluetooth à faible énergie et/ou un dispositif de lecture HF ou UHF-RFID est intégré et le dispositif de commande d'accès, le serveur et les lunettes de données sont configurées pour mettre en œuvre le procédé selon l'une des revendications précédentes.

9. Système selon la revendication 8, **caractérisé en ce qu'**il comprend une télécommande pour sélectionner les vues dans le dispositif d'affichage (10) des lunettes de données (1) et les instructions de commande peuvent être entrées sur au moins un serveur (16) et/ou sur au moins un dispositif de commande d'accès (22), qui est porté comme une montre au poignet de l'utilisateur des lunettes de données (1) et connecté sans fil aux lunettes de données (1).
